# EUROPEAN PATENT APPLICATION

(11) **EP 2 562 706 A1**
(43) Date of publication of application: **27.02.2013**
(21) Application number: 11800827.5
(22) Date of filing: 28.06.2011
(51) Int. Cl.: G06Q 30/00

(54) **INFORMATION PROCESSING DEVICE, INFORMATION PROCESSING METHOD, INFORMATION PROCESSING PROGRAM, AND RECORDING MEDIUM**

(30) Priority: 30.06.2010 JP 2010150087
(71) Applicant: Rakuten, Inc., Tokyo 140-0002 (JP)
(72) Inventor: MASUKO Soh, Tokyo 140-0002 (JP); FUTAMURA Yuji, Tokyo 140-0002 (JP); HIMENO Yaena, Tokyo 140-0002 (JP); HAMAGUCHI Mariko, Tokyo 140-0002 (JP)
(74) Representative: HOFFMANN EITLE
(86) International application number: PCT/JP2011/064758
(87) International publication number: WO 2012/002363

(57) **Abstract**

Provided are an information processing device, an information processing method, an information processing program and a recording medium for providing information for truly inducing purchase motivation for a user. An information processing server, in a widget display region which has been set at a predetermined location upon a Web page, identifies a plurality of transaction objects to present to a blog viewer on the basis of activity history information indicating a history of activity for the transaction objects via the network of the blog viewer, detects completion of transactions for the identified transaction objects, and displays information of the objects of the detected transactions on the basis of the order in which the transactions have been completed.

## Description

### TECHNICAL FIELD

The present invention relates to a technical field for providing information via a network.

### BACKGROUND ART

At present, there is utilized, as an advertizing method in electronic commercial transactions made via a network, a so-called activity advertisement for extracting information on products or services which are predicted to match with a user' s preference and providing (distributing) it as advertisement information to the user on the basis of a user' s activity history (such as viewing history of user-viewed Web pages) via the network.

With the activity targeting advertising, for example, an advertisement on a product or the like extracted based on the user's activity history is displayed in a predetermined region on the Web page (such as blog page) provided to the user (see Patent Document 1, for example).

### CITATION LIST

### PATENT DOCUMRNT

Patent Document 1: Japanese Patent Application Laid-Open No. 2010-044648

### SUMMARY OF THE INVENTION

### PROBLEM TO BE SOLVED BY THE INVENTION

The user grasps information acquired via an advertisement of a product and the like, and a transaction situation (purchase situation and popularity) and the like in the market of the product and the like, for example, thereby may feel a sense of ease for the products and may be induced to purchase the product.

However, the advertisement provided with the activity targeting advertisement provides only an advertisement on which information such as performance and price of the product or the like is displayed.

Thus, the advertisement provided with the activity targeting advertisement did not truly induce purchase motivation for the user.

The present invention has been made in terms of the above problems, and it is an object thereof to provide an information processing device, an information processing method, an information processing program and a recording medium for providing information for truly inducing purchase motivation for a user.

### MEANS FOR SOLVING THE PROBLEM

In order to solve above problem, a invention described in claim 1, in an information processing device that displays information on a transaction object in a display region set at a predetermined location on a Web page displayed in a terminal device, includes an activity history information acquiring means that acquires activity history information indicating a history of activities to a transaction object by a user of the terminal device via a network; a transaction object specifying means that specifies a plurality of transaction objects to be presented to the user from a storing means that stores information on transaction objects on the basis of the activity history information acquired by the activity history information acquiring means; a detecting means that detects completion of transaction of each transaction object specified by the transaction object specifying means; and a control means that displays information on a transaction object whose transaction has been completed in the display region in the order in which the transactions have been completed in response to the detection of the completion of transaction by the detecting means.

Thus, it is possible to provide information which truly induces purchase motivation for the user viewing a Web page.

A invention described in claim 2, in the information processing device according to claim 1, wherein the display region includes partial display regions divided in a predetermined size per transaction object whose transaction has been completed, and when the detecting means continuously detects completions of transactions of related transaction objects within a predetermined period of time, the control means displays information on the related transaction objects together in the partial display regions for displaying any one transaction object among the related transaction objects.

Thus, it is possible to effectively provide information which truly induces purchase motivation for the user viewing a Web page.

A invention described in claim 3, in the information processing device according to claim 1 or 2, wherein the control means displays information on a purchaser or user of the transaction object whose transaction has been completed together with the information on the transaction object whose transaction is detected to have been completed by the detecting means.

Thus, it is possible to provide information which furthermore induces purchase motivation for the user viewing a Web page.

A invention described in claim 4, in the information processing device according to any one of claims 1 to 3, wherein affiliate link information is set in information on a transaction object displayed in the display region by the control means, and the device includes a reward payment processing means that, when a transaction of the transaction object is newly completed via the affiliate link information, sets information on an affiliate reward, the affiliate reward being paid to an establisher of the Web page and a purchaser or user who has completed the transaction of the transaction object as a cause for displaying the information of the transaction object, for the information on the establisher of the Web page and the information on the purchaser or user who has completed the transaction of the transaction object as a cause for displaying the information on the transaction object.

A invention described in claim 5, in the information processing device according to any one of claims 1 to 4, wherein the control means displays stock information on stocks of the transaction object together with the information on the transaction object whose transaction is detected to have been completed by the detecting means.

A invention described in claim 6, in the information processing device according to any one of claims 1 to 5, wherein the control means displays advertisement information on a provider providing the transaction object together with the information on the transaction object whose transaction is detected to have been completed by the detecting means.

A invention described in claim 7, in an information processing method that is performed by an information processing device for displaying information on a transaction object in a display region set at a predetermined location on a Web page displayed in a terminal device, includes an activity history information acquiring step of acquiring activity history information indicating a history of activities to a transaction object by a user of the terminal device via a network; a transaction object specifying step of specifying a plurality of transaction objects to be presented to the user from a storing means that stores information on transaction objects on the basis of the activity history information acquired by the activity history information acquiring step; a detecting step of detecting completion of transaction of each transaction object specified by the transaction object specifying step; and a control step of displaying information on a transaction object whose transaction has been completed in the display region in the order in which the transactions have been completed in response to the detection of the completion of transaction by the detecting step.

A invention described in claim 8 causes a computer included in an information processing device for displaying information on a transaction object in a display region set at a predetermined location on a Web page displayed in a terminal device to execute: an activity history information acquiring step of acquiring activity history information indicating a history of activities to a transaction object by a user of the terminal device via a network; a transaction object specifying step of specifying a plurality of transaction objects to be presented to the user from a storing means that stores information on transaction objects on the basis of the activity history information acquired by the activity history information acquiring step; a detecting step of detecting completion of transaction of each transaction object specified by the transaction object specifying step; and a control step of displaying information on a transaction object whose transaction has been completed in the display region in the order in which the transactions have been completed in response to the detection of the completion of transaction by the detecting step.

A invention described in claim 9 records an information processing program for causing a computer included in an information processing device for displaying information on a transaction object in a display region set at a predetermined location on a Web page displayed in a terminal device to execute: an activity history information acquiring step of acquiring activity history information indicating a history of activities to a transaction object by a user of the terminal device via a network; a transaction object specifying step of specifying a plurality of transaction objects to be presented to the user from a storing means that stores information on transaction objects on the basis of the activity history information acquired by the activity history information acquiring step; a detecting step of detecting completion of transaction of each transaction object specified by the transaction object specifying step; and a control step of displaying information on a transaction object whose transaction has been completed in the display region in the order in which the transactions have been completed in response to the detection of the completion of transaction by the detecting step.

### EFFECT OF THE INVENTION

According to the present invention, it is possible to provide information which truly induces purchase motivation for the user.

### BRIEF DESCRIPTION OF THE DRAWINGS

FIG. 1 is a diagram that illustrates an exemplary schematic structure of an information processing system S according to one embodiment of the present invention.
FIG. 2 is a block diagram that illustrates an exemplary schematic structure of an information processing server 3 according to one embodiment of the present invention.
FIG. 3 is a diagram that illustrates exemplary contents registered in various databases.
FIG. 4 is a sequence diagram that illustrates operations of the information processing system S until information on a transaction object is displayed.
FIG. 5 is an exemplary display screen of information on a transaction object to be displayed in a widget display region.
FIG. 6 is an exemplary display screen when multiple items of information on related transaction objects are displayed together in partial display regions for displaying any one transaction object among the related transaction objects.
FIG. 7 is an exemplary display screen when information on a transaction object whose transaction is detected to have been completed, and information on a purchaser or user of the transaction object whose transaction has been completed are displayed together.
FIG. 8 is an exemplary display screen when information on a transaction object and stock information on stocks are displayed.
FIG. 9 is an exemplary display screen when information on a transaction object and advertisement information on a provider providing the transaction object are displayed together.
FIG. 10 is an exemplary display screen when information on friends of the blog viewer is displayed as information on a transaction object.
FIG. 11 is an exemplary display screen of product information in the widget display region.
FIG. 12 is an exemplary display screen of product information in the widget display region.
FIG. 13 is an exemplary display screen of product information in the widget display region.
FIG. 14 is a sequence diagram that illustrates operations of the information processing system S for affiliate reward payment.

### MODES FOR CARRYING OUT THE INVENTION

### [1. Structure and functional outline of information processing system]

One embodiment according to the present invention will be described below with reference to the drawings. The embodiment described below is where the present invention is applied to an information processing system.

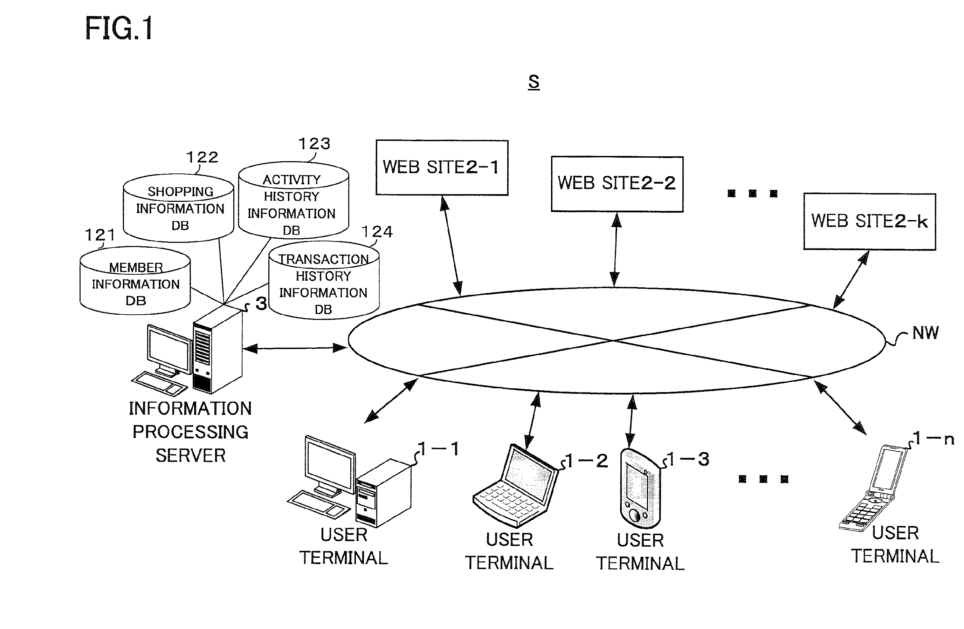

A structure and schematic functions of the information processing system S according to one embodiment of the present invention will be described first with reference to FIG. 1.

FIG. 1 is a diagram that illustrates an exemplary schematic structure of the information processing system S according to one embodiment of the present invention.

As shown in FIG. 1, the information processing system S includes a plurality of user terminals 1-k (k=1, 2 to n) (exemplary terminal devices), a plurality of Web sites 2-k (k=1, 2 to n), and an information processing server 3 (exemplary information processing device).

The user terminals 1-k, the Web sites 2-k and the information processing server 3 can mutually exchange data via a network NW by use of a communication protocol such as TCP/IP. The network NW is constructed by Internet, a dedicated communication line (such as CATV (Community Antenna Television) line)), a mobile communication network (including base stations), and a gateway, for example.

In the information processing system S having the above structure, the user terminal 1-k is a terminal device which is used by a user utilizing various services provided from the Web site 2-k or the information processing server 3, has a Web browser function to access the Web site 2-k or the information processing server 3 and acquire Web pages therefrom via the Web browser, and to display the Web pages in a window screen displayed on a display. The window screen is an active display region of the Web browser. For example, a personal computer (PC), a cell phone, a personal digital assistant (PDA), a portable terminal (Smartphone) integrating a cell phone and a PDA, and a portable game player are applicable to the user terminal 1-k. An operation unit for receiving user' s operation instructions from the user terminal 1-k may be any of keyboard, mouse, remote controller and touch panel interface.

The Web site 2-k is configured of a Web server, an application server, a database server and the like. The Web site 2-k is a site for registering a member-registered user (such as a user of the user terminal 1-k) and a Web page generated (established) based on an instruction from the user in a corresponding manner. The Web page is configured of a file of structured documents such as HTML (Hyper Text Markup Language) documents or XHTML documents, an image file and the like. The Web site 2-k includes a blog site, SNS (Social Networking Service) site (community site) and the like (URLs (Uniform Resource Locator) of the respective sites are different from each other).

When the Web site 2-k is a blog site, the blog site is operated by a blog operator to provide Web pages configuring a so-called blog (Weblog) (which will be called "blog pages" below) in response to a HTTP (Hyper Text Transfer Protocol) request from the user terminal 1-k. A blog site and a blog page will be described below by way of example in the following description, and other sites and other pages (such as My pages customized by user's log-in) may be applied. For example, in the blog site, when the user of the user terminal 1-k makes member registration of the blog site, the user can establish his/her blog page in the blog site. The member-registered user can access the blog page to update his/her blog page. In the following description, the user who establishes or updates the blog page is called "blog establisher" (exemplary Web page establisher). For example, the users other than the blog establisher can access the blog site from their user terminals 1-k to view the provided blog pages of the blog establisher. The user viewing the blog page will be called "blog viewer" below.

The information processing server 3 is a Web server which is installed to provide, to member-registered users (such as users of the user terminals 1-k), various services in a product sales site, a travel reservation site, an accommodation reservation site, a facility use reservation site, a product rental reservation site and the like (the sites are collectively called "Internet market" below. One or a plurality of "shops" registered to open in the "Internet market" are present in the Internet market), and to operate a general service site for providing various items of information.

For example, the information processing server 3 transmits a predetermined Web page to the user terminal 1-k in response to a HTTP request from the user terminal 1-k having logged in the general service site. The thus-transmitted Web page displays thereon Web pages and the like including information on services such as product, travel, beauty and amusement facility as transaction objects handled in the Internet Market, or a user interface for establishing a transactions of the transaction objects. The information processing server 3 performs the product transaction processings such as search of transaction object, purchase of product, reservation of service or reservation of rental (loan) of product in response to a request from the user terminal 1-k of the user having viewed the Web page. Though described later in detail, the information processing server 3 registers the user's viewing history of the Web pages (that is, the history of Web pages transmitted to the user terminal 1-k of the user) or the user's history of transactions as the activity history information indicating a history of user's activities (the activity history information indicates a history of activities to a transaction object) via the network.

The information processing server 3 according to the present embodiment displays information on a transaction object in a display region set at a predetermined position on the Web page (such as the blog page) transmitted from the Web site 2-k.

As an exemplary method for achieving the above, in the present embodiment, a display region (which is called "widget display region" below) is set at a predetermined location on the blog page and information on a transaction object is displayed in the set widget display region by a widget (gadget) program incorporated in the blog page, for example. The widget display region includes partial display regions which are divided in a predetermined size per transaction object whose transaction has been completed (which will be called "completion of transaction" below).

For the widget program, a source code described in a predetermined script language (such as JavaScript (trademark)) is stored as an external script file in the information processing server 3. For example, the <script>∼</script> tag is set (described) in the structured document configuring the blog page to be set such that the Web browser of the user terminal 1-k reads the source code stored in the information processing server 3 and executes the widget program.

An exemplary description is <script type = "type of script language"src="http://xml.xxx.xxx.co.jp/Widget/xx/(widget program storage location)">
user#id=user ID
......
</script>.

Within the tag, the src attribute indicates a region storing the source code therein. "user#id=" describes therein the user ID of the blog establisher who has incorporated the widget program in the blog page. The user ID is transmitted to the information processing server 3 when the source code of the widget program is read or the widget program is executed, for example.

When the blog page is acquired from the Web site 2-k via the Web browser of the user terminal 1-k, for example, the widget program is executed based on the source code read from the information processing server 3. Data can be exchanged between the information processing server 3 and the user terminal 1-k based on the executed widget program. The widget program may be described in the blog page when the <script>∼</script> tag is set in the structured document configuring the blog page, and may be registered in the Web site 2-k. In this case, when the blog page is acquired from the Web site 2-k via the Web browser, the source code does not need to be read from the information processing server 3.

In the present embodiment, the widget display region is set at the predetermined location on the blog page displayed by the Web browser of the user terminal 1-k based on the executed widget program, and the information on a transaction object transmitted from the information processing server 3 is displayed in the set widget display region. At this time, the information processing server 3 specifies the transmitted user ID of the blog establisher, thereby specifying the blog establisher of the blog page displaying the information on a transaction object therein.

Further, in the present embodiment, though described later in detail, the information processing server 3 specifies a plurality of items of information on transaction objects displayed in the widget display region in the blog page on the basis of the activity history information of the blog viewer viewing the blog. The information processing server 3 detects completion of transaction of each specified transaction object, and displays the information on the transaction object whose transaction has been completed in the widget display region in response to the detection of the completion of transaction in the order in which the transactions have been completed (for example, in the order in which the products have been purchased).

The information processing server 3 providing the general service site may be included in, for example, the Web site 2-1 in the Web sites 2-k, or may be in cooperation with the Web site 2-1 (for example, operated by the same operator).

In the example of FIG. 1, a plurality of Web sites 2-k are displayed for simplified description, but one Web site may be employed. One information processings server 3 is displayed in FIG. 1 but the system may be configured of a plurality of servers. Many user terminals 1-k are present per user.

### [2. Structure and functional outline of information processing server]

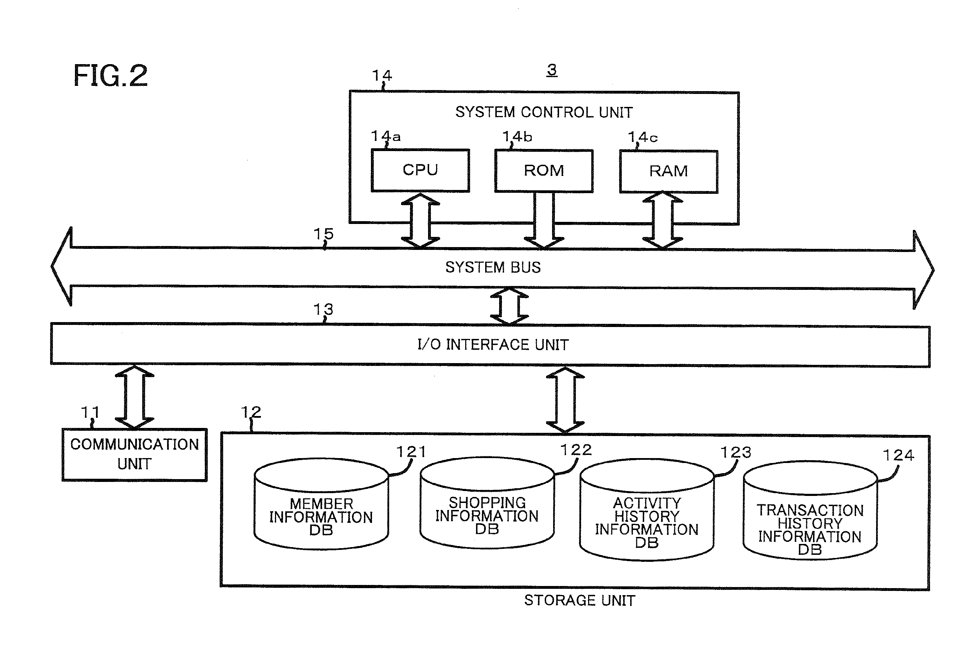

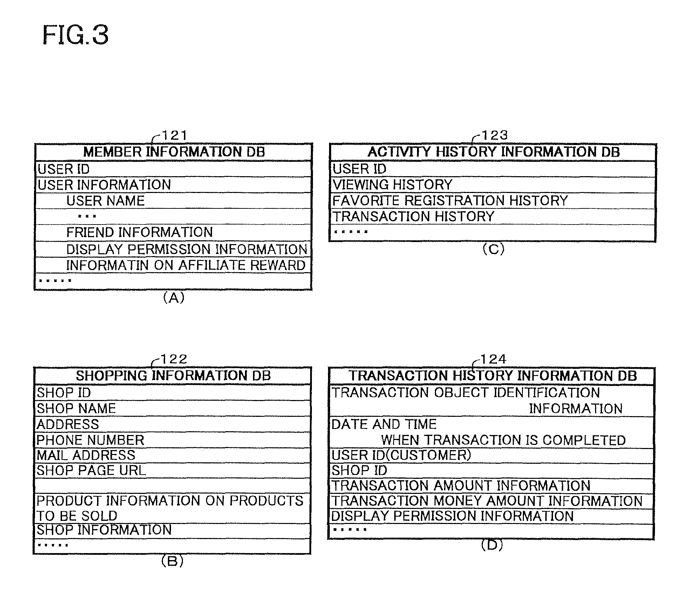

A structure and functions of the information processing server 3 will be described below with reference to FIG. 2 and FIG. 3.

FIG. 2 is a block diagram that illustrates an exemplary schematic structure of the information processing server 3 according to one embodiment of the present invention.

As shown in FIG. 2, the information processing server 3 includes a communication unit 11, a storage unit 12 (exemplary storing means), an I/O interface unit 13 and a system control unit 14. The system control unit 14 and the I/O interface unit 13 are connected with each other via a system bus 15.

The communication unit 11 is connected to the network NW to control a communication state with the user terminal 1-k or the Web site 2-k.

The storage unit 12 is configured of a hard disc drive, for example, and stores therein various programs such as an operating system and application programs (including the information processing program according to the present invention). The information processing program according to the present invention may be acquired via the network NW from other server device, for example, or may be recorded in a recording medium such as CD-ROM and read via a drive.

The storage unit 12 stores therein a file of structured documents described as Web pages provided from the general service site, an image file, and the like, Each content arranged in a Web page is configured of at least one of text, still image and animation.

The storage unit 12 constructs therein a member information database (DB) 121, a shopping information database (DB) 122, an activity history information database (DB) 123, and a transaction history information database (DB) 124.

Exemplary contents registered in various databases will be described herein with reference to FIG. 3.

FIG. 3 is a diagram that illustrates exemplary contents registered in various databases.

The member information database (DB) 121 shown in FIG. 3(A) registers therein the user ID of the member-registered user (user of the general service site) in association with information (which will be called "user information" below) such as user name, password, sex, age, address, phone number, e-mail address, friend information, display permission information or affiliate reward. The user information is discriminable per user by the user ID. The user information is acquired and registered by user' s inputting a predetermined input form during the member registration or subsequent update in the general service site, for example.

Herein, the user ID is an identifier for identifying a user.

The member-registered users include blog establishers, blog viewers and the like.

The friend information is information on users in a friend relationship with the member-registered user, and is acquired from the user-input information for the member registration, or friend-registered information (list) by a so-called friend registration function (a function of registering users in a friend relationship) in a blog site registered in a predetermined database, a SNS site or an instant messenger.

The display permission information is information indicating whether to permit the information on a transaction object whose transaction has been completed by the user his/herself to be displayed in the widget display region. The display permission information may be registered per transaction object on the basis of the input of the user having completed the transaction (for example, by checking a check box set in the Web page including the user interface for completing the transaction) when the transaction is completed (for example, information displayed when payment information is displayed or product order information is confirmed).

The information on (regarding) affiliate reward indicates specific contents of the affiliate reward paid to the user. Though described later in detail, in the present embodiment, when product purchase or the like is made via the affiliate link information, an affiliate reward (affiliate result reward) is paid to predetermined users. The affiliate reward may be, for example, points, electronic money, discount coupons, service tickets and the like, not limited to cash. For the information on affiliate reward, specific contents such as target of the affiliate reward paid to the users (that is, the electronic money or the like) or specific money amount of the affiliate reward are registered.

The shopping information database (DB) 122 shown in FIG. 3(B) registers therein shop information such as shop ID of a shop (exemplary provider providing transaction objects. It will be called "shop" below) registered to open in the Internet market provided from the information processing server 3, shop name, address, phone number, e-mail address, shop page URL, product information on products to be sold, rate of affiliate reward per shop in an associated manner. The shop ID is an identifier for identifying a shop. The product information on products to be sold includes product ID of each product, product name, product code (such as JAN code), product explanation (such as product specification, product category (kind) or product characteristics), product image data, sales price information and stock information of each product sold in the shop. The product ID is an identifier for identifying a product. The shop information includes advertisement information on a shop advertisement such as sale information set by a shop manager. The sale information registers therein information such as date and time for sale, place for sale, period for sale, and transaction objects for sale.

The activity history information database (DB) 123 shown in FIG. 3(C) registers therein, as the activity history information of the member-registered user, viewing history, favorite registration history and transaction history in association with the user ID.

The activity history information is updated according to a member-registered user' s activity on a transaction object via the network.

Specifically, for example, when a detail page or the like for a transaction object (such as product or service) is displayed on the display unit of the user terminal 1-k via the operation of the user logging in the general service site, its viewing history is added to the activity history information. The viewing history includes information such as URL (Uniform Resource Locator) of the viewed page and viewing date and time. For example, the product ID or the like capable of specifying a transaction object can be extracted from the viewed page.

When the user logging in the general service site performs a favorite registration operation from the user terminal 1-k, its favorite registration history is added to the activity history information. The favorite registration history includes information such as URL of favorite-registered page, and date and time of favorite registration. The favorite registration means to register a page URL and the like for rapidly viewing desired information later. Well-known bookmarks (bookmarker, sticky) and registration in a check list are exemplary favorite registrations.

When a transaction of a transaction object is completed by the user logging in the general service site at a predetermined shop in the Internet market, the transaction history is added to the activity history information. The completion of transaction is determined when the payment processing for the transaction object is completed or when an e-main indicating that the payment processing has been completed is distributed to the user's e-mail address, for example. The transaction history includes information such as transaction object identification information, transaction date and time, shop ID where the transaction was made, user ID of transaction party, transaction amount or transaction money amount. When the transaction object is a product, the transaction object identification information includes information such as product ID of the purchased product, purchase date and time, shop ID where the purchase was made, user ID of the purchaser, purchased amount, or purchase money amount. When the transaction object is a service, the transaction object identification information includes information such as product ID of the reserved service, reservation date and time, shop ID where the reservation was made, user ID of who has made reservation, or money amount. When the transaction object is a product rental, the transaction object identification information includes information such as product ID of the rental object, reservation date and time, shop ID where the reservation was made, user ID of the user, rental period, or price.

The activity history information may be registered in a database other than the activity history information database. The transaction history may be acquired from the transaction history information DB 124.

The transaction history information database (DB) 124 shown in FIG. 3(D) registers therein the information on the transaction objects handled in the predetermined shop in the Internet market where the transactions have been completed in the order in which the transactions have been completed, and registers the transaction object identification information (the product ID of product, the product ID of service, the product ID of rental object, and the like) in association with transaction date and time when the transaction has been completed, the user ID of the purchaser or user of the product object, and the shop ID where the transaction object is handled, the transaction amount information, the transaction money amount information, the display permission information and the like. The display permission information is acquired from the member information DB 121 and registered in the transaction history information DB 124 when a transaction is completed. The display permission information may be acquired from the member information DB 121 with the user ID as a key, not registered in the transaction history information DB 124.

The system control unit 14 is configured of a CPU (Central Processing Unit) 14a, a ROM (Read Only Memory) 14b, a RAM (Random Access Memory) 14c and the like. The CPU 14a reads and executes various programs stored in the ROM 14b or the storage unit so that the system control unit 14 functions as an activity history information acquiring means, a transaction object specifying means, a detecting means, a controlling means, a reward payment processing means and the like according to the present invention, thereby performing the processings described later.

### [3. Operations of information processing system S]

The operations of the information processing system S according to the present embodiment will be described below.

### (3-1. Transaction object information displaying operation)

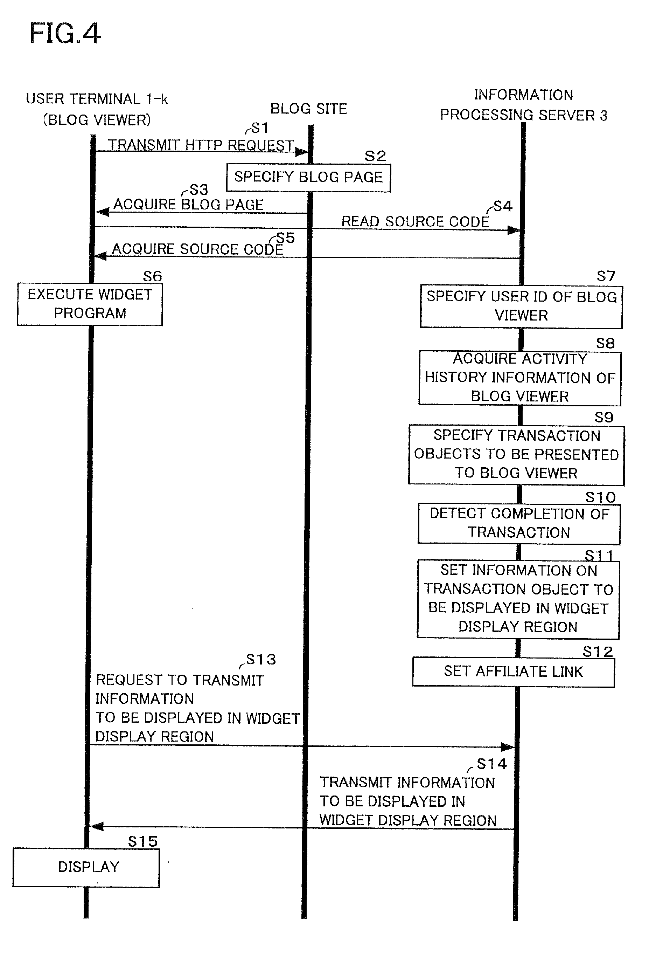

A transaction object information displaying operation will be described first with reference to FIG. 4.

FIG. 4 is a sequence diagram that illustrates the operations of the information processing system S until transaction object information is displayed.

As shown in FIG. 4, at first, when the blog viewer operates the user terminal 1-k to activate the Web browser so that a URL of the blog page (for example, searched by the search function) of a predetermined user is designated and an access request (such as http request) is transmitted from the user terminal 1-k to the blog site (step S1).

Then, in the blog site, a blog page registered in the database, for example, is specified based on the requested URL (step S2).

When the specified blog page is acquired via the Web browser of the user terminal 1-k, for example, (step S3), the user terminal 1-k transmits a request of reading a source code of the widget program, and the user ID of the blog establisher to the information processing server 3 according to the setting in the structured document configuring the blog page (step S4).

Then, when acquiring the source code (step S5), the user terminal 1-k executes the widget program (step S6).

Then, the system control unit 14 in the information processing server 3 specifies the user ID of the blog viewer (step S7).

An exemplary method for specifying a user ID of a blog viewer will be described herein.

For example, there will be assumed that the blog viewer is already member-registered in the general service site.

When the member-registered blog viewer is logging in the information processing server 3 providing the general service site, a session is established between the user terminal 1-k operated by the blog viewer and the information processing server 3. The establishment of the session enables the information processing server 3 to specify the user ID of the user with which the session is established.

When the widget program is executed as described above, data can be exchanged between the information processing server 3 and the user terminal 1-k, and thus the session state between the user terminal 1-k operated by the blog viewer and the information processing server 3 is kept.

Thus, the information processing server 3 can specify the user ID of the blog viewer with reference to the member information DB 121.

When the member-registered blog viewer has not logged in the information processing server 3 providing the general service site, a cookie stored in the user terminal 1-k of the blog viewer is used thereby to specify the user ID of the blog viewer.

For example, when the member registration in the general service site is terminated, the information processing server 3 issues a cookie storing therein information necessary for login such as user ID and password of a newly-registered member, and transmits it to the user terminal 1-k of the newly-registered member. The user terminal 1-k stores (saves) the transmitted cookie. The cookie stored in the user terminal 1-k is transmitted to the information processing server 3 on access to the information processing server 3. Then, the information processing server 3 can specify the user ID of the blog viewer with reference to the user ID stored in the cookie received from the user terminal 1-k.

When the member-registered blog viewer has not logged in the information processing server 3 providing the general service site and cannot use the cookie (the cookie has been deleted or the cookie has expired), a message for promoting the blog viewer to perform the log-in processing may be displayed in the widget display region, for example.

Then, the system control unit 14 acquires the activity history information of the specified blog viewer (step S8).

Specifically, the system control unit 14 acquires at least one of the viewing history, the favorite registration history and the transaction history as the activity history information registered in association with the user ID specified in step S7 with reference to the activity history information DB 123.

The viewing history of the blog viewer may be acquired from the cookie stored in the user terminal 1-k of the blog viewer. For example, when the Web page displayed on the display unit of the user terminal 1-k is viewed through the user operation, the cookie storing the viewing history (such as URL of the Web page) is issued and stored in the user terminal 1-k, the viewing history can be acquired from the cookie.

Then, the system control unit 14 specifies a plurality of transaction objects to be presented to the blog viewer based on the acquired activity history information (step S9).

For example, a product ID of a product registered in the purchase history as the purchase history information or the viewing history information or the favorite registration information is extracted and the shopping information DB 122 is referred to so that a product indicated by the extracted product ID or a plurality of products with the same category or the same specification as the product are specified as the transaction objects to be presented to the blog viewer.

For example, when a product name or product code is specified based on a character string displayed in a viewed page or a page displayed in the favorite registration history and the extracted product name or product code is registered in the shopping information DB 122 (or contained in the product information on the transaction object), a product (product ID) corresponding to the product name or product code as the product object to be presented to the blog viewer or a plurality of products with the same category or the same product specification as the product name (that is, the same products) are specified. Alternatively, when a product image is specified from an image displayed in a viewed page or a page displayed in the acquired favorite registration history, and the extracted product image is registered in the shopping information DB 122, a product corresponding to the product image as the transaction object to be presented to the blog viewer or a plurality of products with the same category or the same product specification as the product name of the product are specified.
Then, the system control unit 14 detects completion of transaction of each transaction object specified in step S9 (step S10).

As described above, the transaction history information DB 124 registers therein the information on transaction objects handled in the Internet market in the order in which the transactions have been completed. Thus, the system control unit 14 continuously refers to the transaction history information DB 124, thereby at present detecting whether transactions of the specified transaction objects have been newly completed.

Then, in response to the detection of completion of transaction of each specified transaction object (when it is detected that the transactions of the specified transaction objects have been newly completed), the system control unit 14 sets the information on the transaction object whose transaction is detected to have been completed, as information to be displayed in the widget display region (step S11).

For the information on a transaction object to be displayed, product name, product image data, sales price information and product explanation corresponding to each product ID detected in step S10, for example, are extracted from the shopping information DB 122 and are set.

Then, the system control unit 14 sets, as the information on a transaction object to be displayed, affiliate link information to a product purchase procedure page corresponding to the shop handling the set transaction object per product (step S12).

The affiliate link information (such as <a···</a>) includes, for example, a link reference phrase (such as href=), a URL ("http://.afl.xxxx.abc.co.jp/··) of the product purchase procedure page, a product ID of the transaction object set in step S11, a shop ID, a user ID of the blog establisher specified in step S7, a user ID of the purchaser or user of the transaction object in the completed transaction detected in step S10 (that is, the purchaser or user who has completed the transaction of the transaction object as a cause (trigger) for displaying the information on the transaction object), and designation information (such as target="#blank"···) of the information on the transaction object to be liked.

The URL of the product purchase procedure page, the product ID, the shop ID of the shop, the user ID of the blog establisher, and the user ID of the purchaser or user of the transaction object in the completed transaction, which are contained in the affiliate link information, configure the affiliate URL (the product ID, the shop ID and the user ID are encrypted, for example).

When the information on a transaction object to be displayed is text data, the text data is described (for example, target="#blank">apple</a>). When the information on a transaction object to be displayed is product image data, the URL of the product image data is described in the designation information in the affiliate link (for example, target="#blank"><img src="http://hbb.fruit.abc-co.jp/apple···></a>).

The user ID of the purchaser or user who has completed the transaction of the transaction object as a cause for displaying the information on the transaction object can be specified with reference to the transaction history information DB 124.

Thereafter, when the user terminal 1-k of the blog viewer makes a request (made at a predetermined interval) of transmitting the information on the transaction object for which the affiliate link information is set in step S12 on the basis of the widget program (step S13), the system control unit 14 transmits the information on the transaction object for which the affiliate link information is set to the user terminal 1-k having made the request (step S14) to be displayed (step S15).

The information processing server 3 may push the information on the transaction object for which the affiliate link information is set in step S12 to the user terminal 1-k (widget program) at a predetermined interval, without the need of the transmission request.

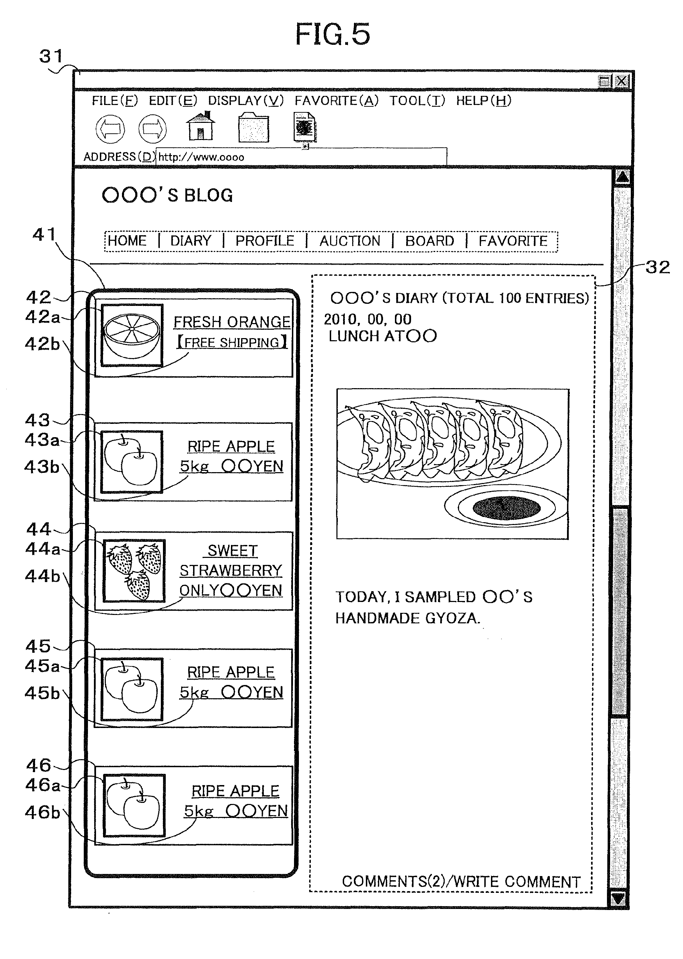

The display screen of information on a transaction object to be displayed in the widget display region will be described herein with reference to FIG. 5.

FIG. 5 is an exemplary display screen of information on a transaction object to be displayed in the widget display region.

As shown in FIG. 5, a Web browser 31 displays therein a blog article display part 32 and a widget display region 41 as a blog page.

In the blog article display part 32, articles daily updated by the blog establisher are displayed, and viewers of the articles put links to the articles, or comments such as personal opinions, remarks and interpretation of the viewers are added and their information is described in time sequence.

The widget display region 41 displays the above widget display region, where the set information on transaction objects is displayed in partial display regions 42 to 46.

In the example shown in FIG. 5, the system control unit 14 displays information on transaction objects in the partial display regions divided in a predetermined size per transaction object whose transaction has been completed, and displays it in the order in which the transactions have been completed.

Specifically, the partial display regions 42 to 46 display therein product image display parts 42a to 46a as the information on transaction objects and product information display parts 42b to 46b as the transaction objects, respectively.

More specifically, the partial display region 42 displays therein the product image display part 42a in which an image of orange is displayed, and the product information display part 42b in which a product name is displayed.

The partial display region 43 displays therein the product image display part 43a in which an image of apple is displayed, and the product information display part 43b in which a product name and a product prince are displayed.

The partial display region 44 displays therein the product image display part 44a in which an image of strawberry is displayed, and the product information display part 44b in which a product name and a product price are displayed.

The partial display region 45 displays therein the product image display part 45a in which an image of apple is displayed, and the product information display part 45b in which a product name and a product price are displayed.

The partial display region 46 displays therein the product image display part 46a in which an image of apple is displayed, and the product information display part 46b in which a product name and a product price are displayed.

As described above, the partial display regions 42 to 46 are displayed in the order in which the transactions have been completed as of this moment. In the widget display region 41, the partial display regions 42 to 46 are displayed to be moved up in the screen in the order in which the transactions have been completed. Thus, it is seen that the transaction of the product displayed in the partial display region 46 has been completed lately among the partial display regions 42 to 46 displayed in the widget display region 41.

When a new transaction is detected, the partial display region 42 for which the transaction has been initially completed as of this moment, among the partial display regions 42 to 46 displayed in the widget display region 41, is erased from the widget display region 41, the partial display regions 43 to 46 are moved up in the screen, and the information to be displayed in the partial display region for which the transaction has been completed lately is displayed while being moved from below upward in the widget display region 41. That is, in the widget display region 41, the product information is displayed upward in the order in which the transactions have been completed, or is scroll-displayed.

With the display, the blog viewer can grasp how a product in which he/she is interested is transacted in the market. He/she can grasp that a product in which he/she is interest is transacted with other users, which causes him/her to purchase the product at ease.

The affiliate link information is set in one of or both the product image display parts 42a to 46a and the product information display parts 42b to 46b.

The affiliate link information and the affiliate reward paying operation will be described below in detail.

For information on a transaction object to be displayed in the widget display region, when it is continuously detected within a predetermined period of time that a plurality of transactions of related transaction objects have been completed, all the information on the related transaction objects may be displayed together in the partial display regions for displaying any one transaction object among the related transaction objects.

The user (blog viewer) may be further induced to purchase a new product when information on other kinds of products is displayed than when information on the same products is displayed.

Thus, the information on related transaction objects is displayed together in one display region.

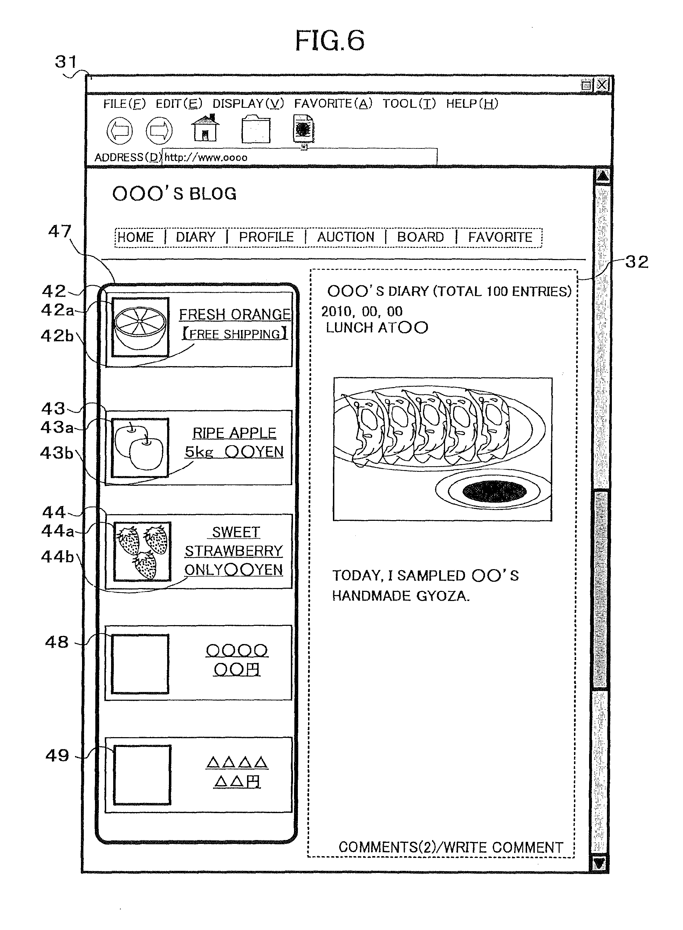

There will be described the display screens in which the information on the related transaction objects is displayed together in the partial display regions for displaying any one transaction object among the related transaction objects by comparing FIG. 5 and FIG. 6.

FIG. 6 is an exemplary display screen when the information on the related transaction objects is displayed together in the partial display regions for displaying any one transaction object among the related transaction objects. In the drawings illustrated below, the same members having the same member names and the same member numbers as those in the already-illustrated drawings have at least the same functions, and thus an explanation thereof will be omitted.

In the widget display region 41 shown in FIG. 5, the information on a transaction object of "apple" as the information on the related transaction objects is displayed in the partial display regions 42, 45 and 46.

In the example shown in FIG. 6, when transactions of similar products (exemplary related transaction objects) are continuously detected within a period of time displayed in the widget display region 47 at a time (exemplary predetermined period of time), the related partial transaction objects are displayed together in the partial display region 42 (exemplary partial display region for displaying one transaction object among the related products).

Specifically, the widget display region 41 shown in FIG. 5 displays the partial display regions 42, 45 and 46 in which the image of apple as the same product is displayed, respectively, while in the widget display region 47 shown in FIG. 6, the partial display regions 42, 45 and 46 in which the image of apple is displayed, respectively, are displayed together in the partial display region 42 in which one image of apple is displayed. Other partial display regions 48 and 49 are newly displayed.

Products or the like with the same product specification, the same product category or the same characteristics can be assumed as the related products among the products displayed in the widget display region 41, for example. The predetermined period of time can be arbitrarily set.

The information on purchasers or users of the transaction objects whose transactions have been completed may be displayed together with the information on the transaction objects whose transactions are detected to have been completed.

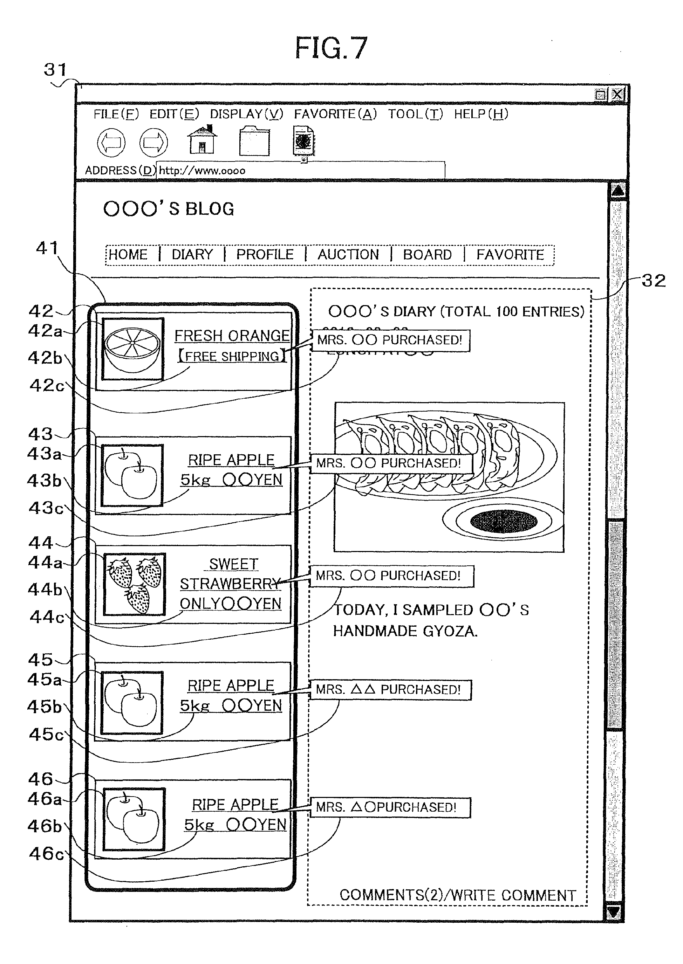

There will be described a display screen when information on purchasers or users of transaction objects whose transactions have been completed is displayed together with the information on the transaction objects with reference to FIG. 7.

FIG. 7 is an exemplary display screen when the information on the purchasers or users of the transaction objects whose transactions have been completed is displayed together with the information on the transaction objects whose transactions are detected to have been completed.

Herein, the system control unit 14 displays the information on the purchasers or users of the transaction objects whose transactions have been completed together with the information on the transaction objects whose transactions are detected to have been completed.

As shown in FIG. 7, the partial display regions 42 to 46 display therein transaction object purchaser display parts 42c to 46 therein. When the transaction object is a service, users of the transaction object are displayed. The purchasers or users of the transaction object are specified with reference to the transaction history information DB 124. Whether to display the users of the transaction obj ects is determined based on the display permission information registered in the member information DB 121.

Stock information on stocks may be displayed as the information on transaction objects to be displayed in the display region.

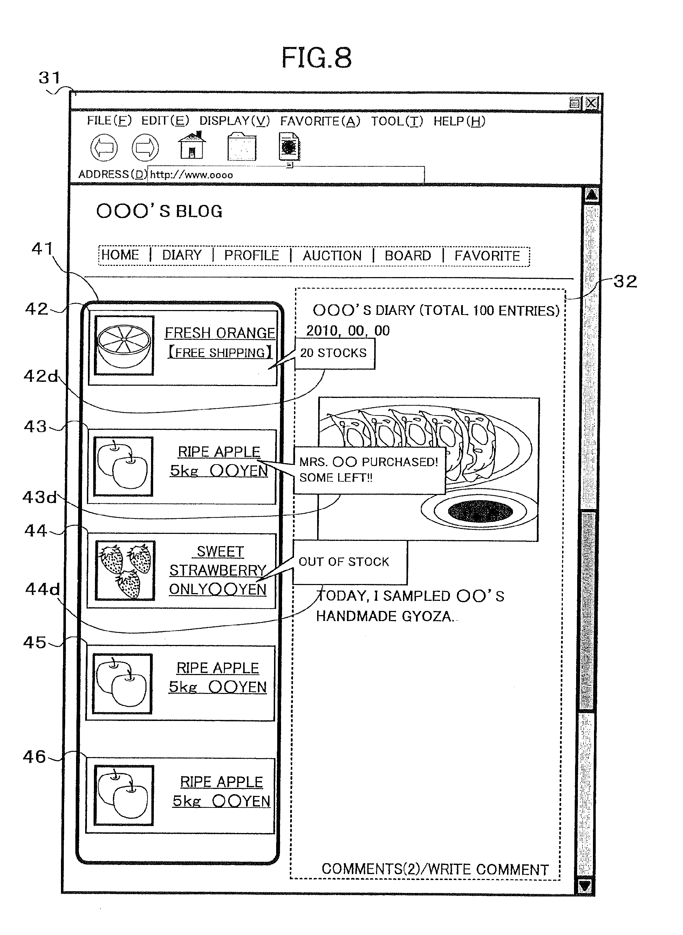

There will be described a display screen when the stock information on stocks is displayed together with the information on transaction objects with reference to FIG. 8.

FIG. 8 is an exemplary display screen when the stock information on stocks is displayed together with the information on transaction objects.

The system control unit 14 displays the stock information on stocks of the transaction objects together with the information on the transaction objects whose transactions are detected to have been completed.

The stock information on stocks indicates the number of stocks in the shops where the transaction object is handled or the state of the stocks in predetermined comments. For example, when the transaction object is a product, the number of stocks of the product and the like are displayed, when the transaction object is a service, the number of persons such as the fixed number of persons of the service (such as the fixed number of persons of a package tour) is displayed, and when the transaction obj ect is a rental, the number of stocks of a product for the rental and the like are displayed.

Specifically, a stock information display part 42d displayed in the partial display region 42 in FIG. 8 displays therein the number of stocks as the information on stocks.

A stock information display part 43d displayed in the partial display region 43 displays therein that a small number of stocks remains as the information on stocks.

A stock information display part 44d displayed in the partial display region displays therein that no stock is present as the information on stocks.

The information on stocks is acquired with reference to the stock information registered in the shopping information DB 122.

Advertisement information on the provider providing the transaction objects may be displayed as the information on transaction objects displayed in the display regions.

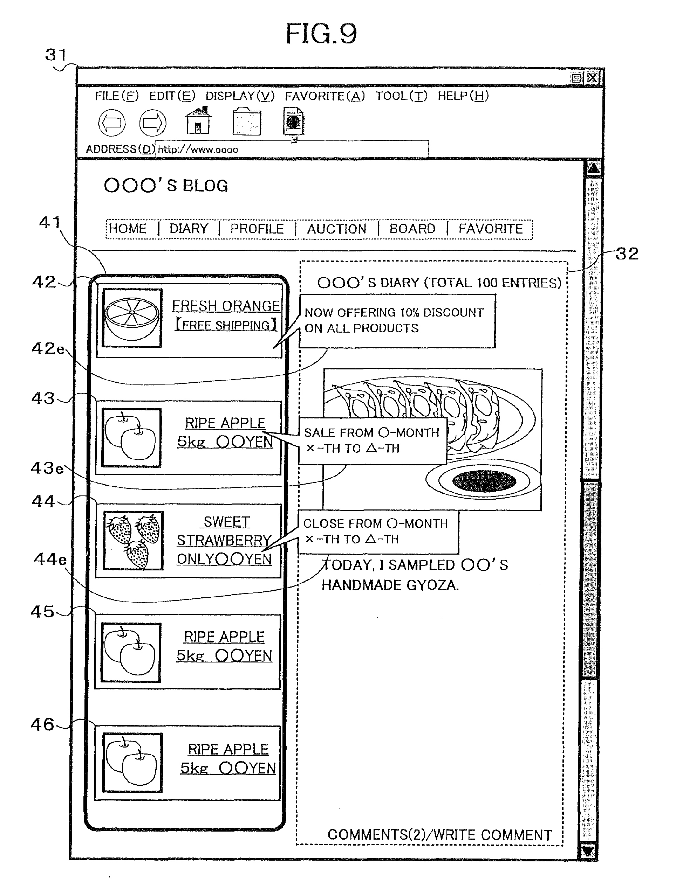

There will be described a display screen when the advertisement information on the provider providing the transaction objects is displayed together with the information on transaction objects with reference to FIG. 9.

FIG. 9 is an exemplary display screen when the advertisement information on the provider providing the transaction objects is displayed together with the information on the transaction objects.

Herein, the system control unit 14 displays the advertisement information on the provider providing the transaction objects together with the information on the transaction objects whose transactions are detected to have been completed.

The provider providing the transaction objects assumes a shop in the Internet market or an auction site where individuals put products on show, and an explanation will be made by way of the shop as an exemplary provider.

The advertisement information on the providers when the provider is a shop is displayed with reference to the shop information registered in the shopping information DB 122.

Specifically, an advertisement information display part 42e displayed in the partial display region 42 displays therein that the sale is being currently held as the advertisement information.

An advertisement information display part 43e displayed in the partial display region 43 displays therein when the sale is to be held as the advertisement information.

An advertisement information display part 44e displayed in the part display region 44 displays therein information on closed days of the shop as the advertisement information.

The advertisement information can set therein arbitrary information which is desired to be advertised to the users in addition to the above examples.

Friend information of the blog viewer may be displayed as the information on transaction object.

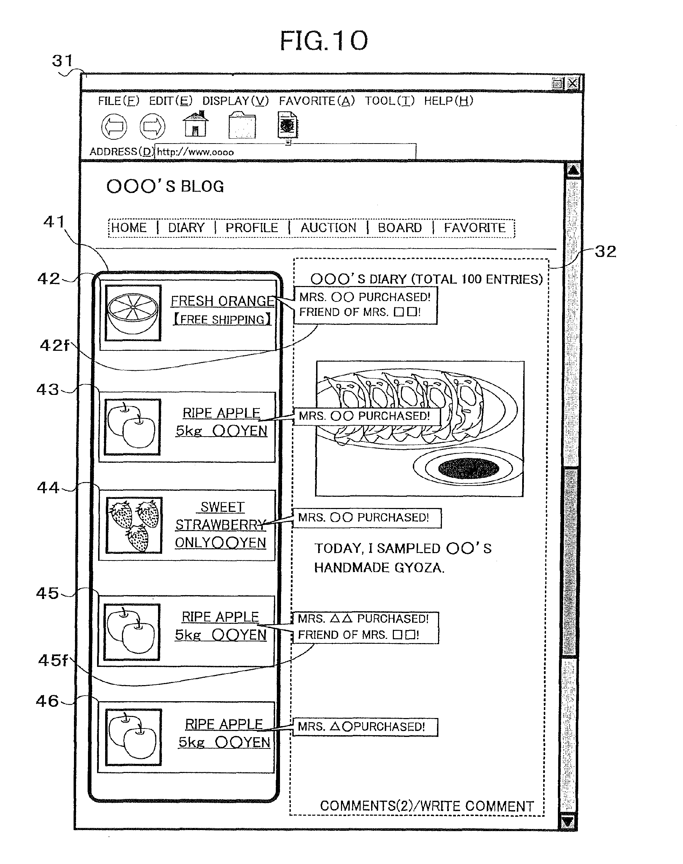

FIG. 10 is an exemplary display screen when the friend information of the blog viewer is displayed as the information on a transaction object.

The friend information is displayed with reference to the friend information stored in the member information DB 121 in association with the user ID of the blog viewer. Alternatively, it may be acquired from the friend-registered information by a so-called friend registration function (function of registering users in a friend relationship) in blog sites, SNS sites or instant messenger registered in external databases.

Specifically, when the purchase or user of the transaction object whose transaction has been completed is a friend of the blog viewer, the fact is displayed in the widget display region.

More specifically, a friend information display part 42f displayed in the partial display region 42 displays therein that the purchaser or user is a friend of the blog viewer as the friend information.

A friend information display part 45f displayed in the partial display region 45 displays therein that the purchaser or user is a friend with the blog viewer as the friend information.

In this way, when the purchaser of the transaction object is a friend of the blog viewer, the fact is displayed so that reliability for the product displayed as the product information increases, for example, which further induces purchase motivation for the blog viewers. For example, when the product displayed as the product information is clothes, it is possible to prevent the blog viewers from purchasing the clothes with the same design again and to promote to purchase different clothes (such as clothes with the same design but different color).

A display form of the product information in the widget display region may be changed as needed.

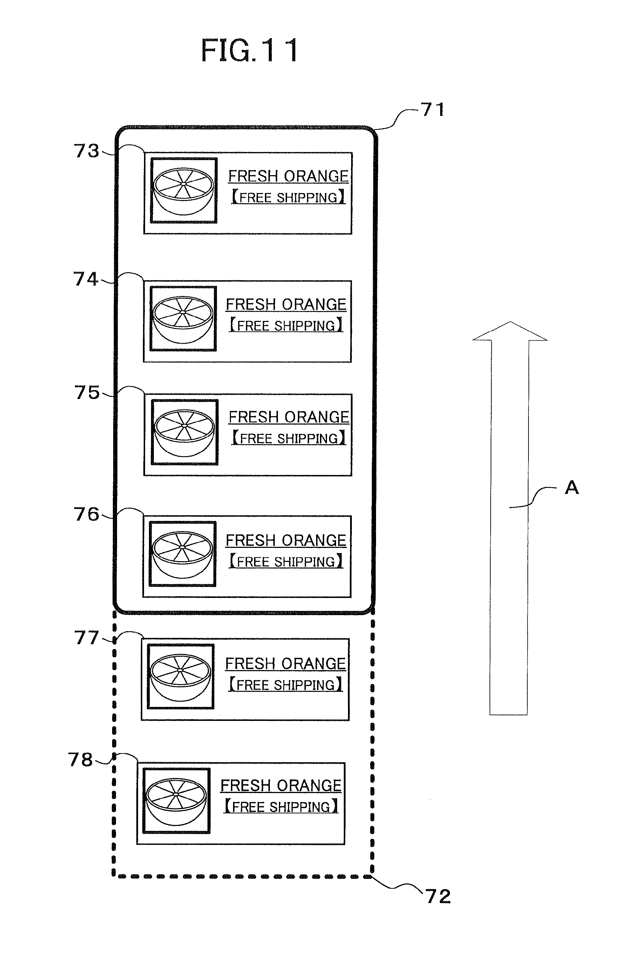

An exemplary display screen of product information in the widget display region will be described herein with reference to FIG. 11 to FIG. 13.

There will be assumed that a plurality of transaction objects are displayed in the widget display region in the order in which the transactions have been completed.

Specifically, as shown in FIG. 11, there will be assumed that partial display regions 73 to 78 relating to the same products of orange, as the related transaction objects, are displayed in a widget display region 71 while being moved in the arrow A (upward) in the order in which the transactions are completed.

In FIG. 11, the partial display regions 73 to 76 displayed in the widget display region 71 can be viewed by the blog viewer on the actual blog page, and a region displayed in a virtual widget display region 72 indicates the partial display regions 77 to 78 to be displayed while being moved in the arrow A from here.

Since the information on transaction objects displayed in the partial display regions 73 to 78 is the information on the same product, the displays of product images or product names displayed as the information on the transaction objects are the same.

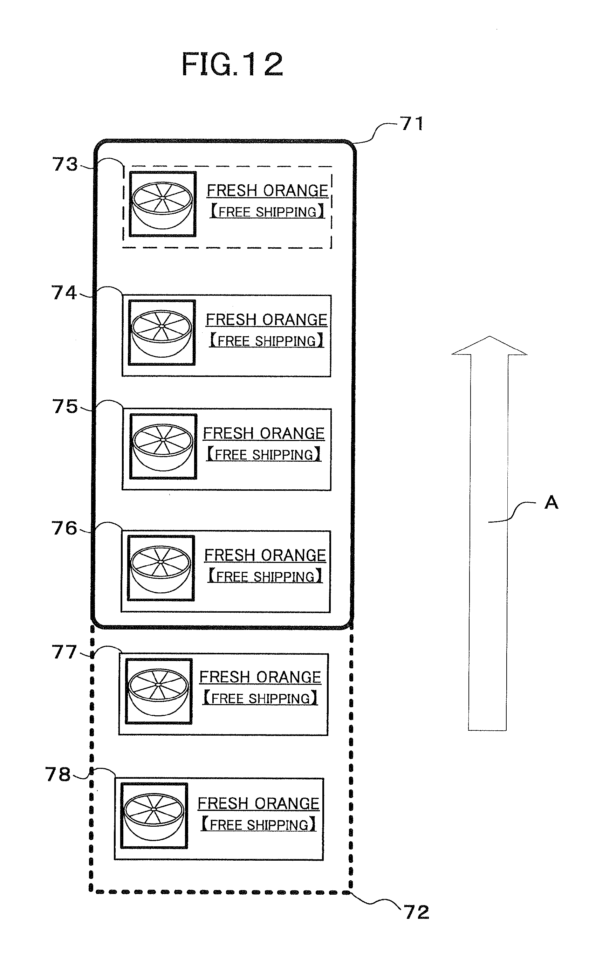

Thus, when the partial display regions 73 to 78 are displayed while being moved in the arrow A in the order in which the transactions have been completed, the partial display regions 73 to 78 look stopped due to an afterimage phenomenon.
Thus, in the example shown in FIG. 12, in order to cause the blog viewers to visually grasp that the partial display regions 73 to 78 are displayed while being moved in the arrow A direction, the frame of the partial display region 73 which disappears from the display region 71 along with the moving is blinked.
Further, the partial display regions 73 to 78 may be displayed while being moved in the arrow A direction by hiding the partial display region 73 to 78 (that is, all the partial display regions displayed in the widget display region) and then displaying the same again (that is, blinking the partial display regions 73 to 78).

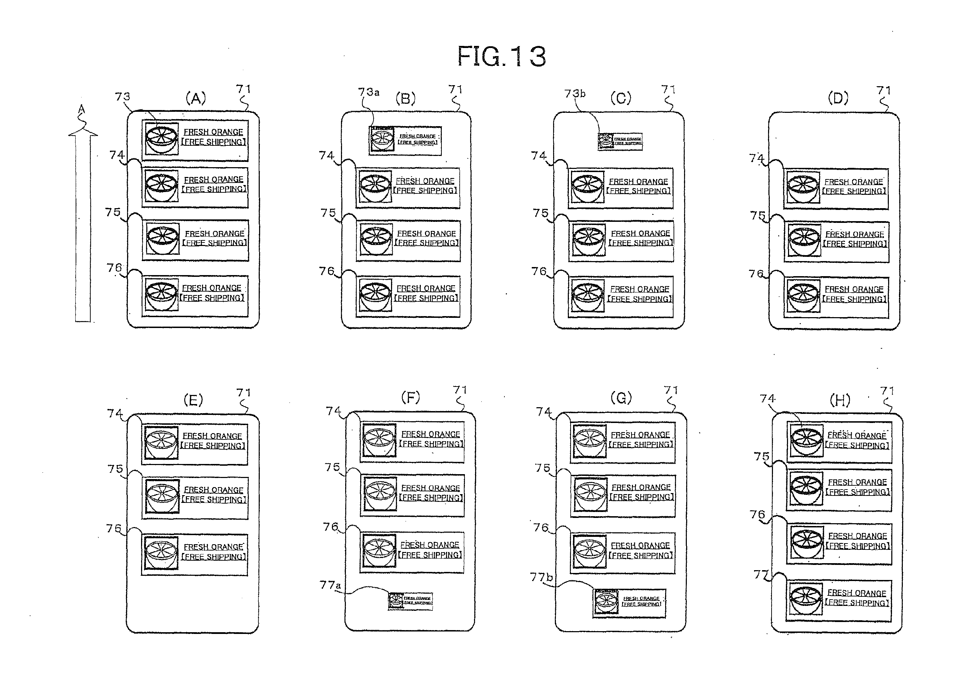

In the examples shown in FIGS. 13(A) to (H), the partial display region 73 disappearing from the widget display region 71 along with the moving is displayed to be gradually downsized (for example, in FIGS. 13(A) to (C)), the partial display region 74 to the partial display region 76 are moved, and the partial display region 77 appearing in the widget display region 71 is displayed to be gradually enlarged (for example, in FIGS. 13(F) to (H)).

Specifically, for example, a partial display region 73a smaller in its display size than the partial display region 73 is first displayed as the partial display region 73 disappearing from the widget display region 71 along with the moving (FIG.13(B) ). Then, a partial display region 73b smaller in its display size than the partial display region 73a is displayed (FIG. 13(C)). At last, the partial display region 73b is eliminated (FIG. 13(D)). In this way, the partial display region 73 to disappear from the widget display region 71 along with the moving is displayed to be gradually downsized by use of the partial display region 73a and the partial display region 73b.

The partial display region 74 to the partial display region 76 are moved in the arrow A direction in order to display the partial display region 77 in the widget display region 71 along with the moving (FIG. 13(E)).

A partial display region 77a much smaller in its display size than the partial display region 77 is displayed as the partial display region 77 to appear in the widget display region 71 along with the moving (FIG. 13(F)). Then, a partial display region 77b larger in its display size than the partial display region 77a is displayed (FIG. 13(G)). At last, the partial display region 77 larger in its display size than the partial display region 77b is displayed (FIG. 13(H)). In this way, the partial display region 77 to appear in the widget display region 71 along with the moving is displayed to be gradually enlarged by use of the partial display region 77a and the partial display region 77d. By doing so, even when similar product information is continuously displayed, the blog viewers can grasp that the regions are displayed while being moved in the arrow A direction.

### (3₋2. Affiliate reward paying operation)

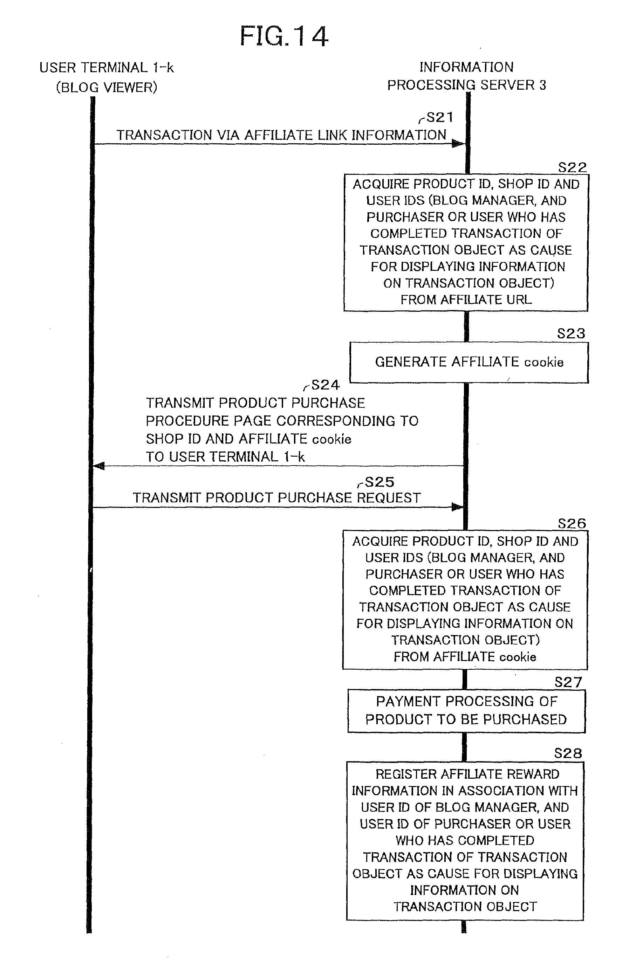

An affiliate reward paying operation will be described below with reference to FIG. 14.

FIG. 14 is a sequence diagram that illustrates the operations of the information processing system S for affiliate reward payment.

When information on a transaction object is designated by a user's operation (for example, a click operation by the mouse or tapping operation on the touch panel) while the information on a transaction object in the widget display region is being displayed in the window screen of the user terminal 1-k, for example, the Web browser of the user terminal 1-k transmits a page request in which the affiliate URL set for the information on a transaction object is set in the header to the information processing server 3 (step S21).

Then, when receiving the page request, the system control unit 14 in the information processing server 3 acquires the affiliate URL set in the header of the received page request and recognizes the affiliate link, thereby acquiring the product ID, the shop ID of the shop, the user ID of the blog establisher and the user ID of the purchaser or user who has completed the transaction of the transaction object as a cause for displaying the information on the transaction object from the URL (step S22).

Then, the system control unit 14 generates an affiliate Cookie indicating that the affiliate link was routed (step S23) . The affiliate Cookie contains the product ID, the shop ID, the user ID of the blog establisher, and the user ID of the purchaser or user whose has completed the transaction of the transaction object as a cause for displaying the information on transaction object, and the expiration of the Cookie (for example, 30 days later), which have been acquired from the affiliate URL.

Then, the system control unit 14 transmits, to the user terminal 1-k, the product purchase procedure page corresponding to the acquired shop ID and the generated affiliated Coolie (set in the response header for transmitting the product purchase procedure page) (step S24).

The user terminal 1-k having received the product purchase procedure page and the affiliate Cookie displays the product purchase procedure page in the window screen, and saves the affiliate Cookie. There may be configured such that the affiliate coolie is not transmitted to and saved in the user terminal 1-k, and the affiliate information containing the product ID, the shop ID, the user ID of the blog establisher and the user ID of the purchaser or user who has completed the transaction of the transaction object as a cause for displaying the information on the transaction object, which are to be contained in the affiliate Cookie, is stored in the storage unit 12 (for example, registered in the member information DB 121) only for a predetermined period of time in association with the user ID of the user of the user terminal 1-k (specified by the login of the user).

When the user selects the number of products to purchase, the payment method, the delivery address of the products, and the like and designates the confirmation button for confirming the product purchase in the product purchase procedure page (or a page to which the page transits), a product purchase request containing the selected information is transmitted to the information processing server 3 (step S25).

At this time, when the affiliate Cookie is saved in the user terminal 1-k, the affiliate Cookie is set in the header of the product purchase request and then the product purchase request is transmitted to the information processing server 3.

Even if the product purchase procedure is interrupted (for example, the page display ends or the Web browser ends) after the product purchase procedure page is displayed, since the affiliate Cookie is saved in the user terminal 1-k until the expiration date of the affiliate Cookie, the affiliate Cookie is contained in the product purchase request through the product purchase procedure until the expiration date.

When receiving the product purchase request, the system control unit 14 in the information processing server 3 acquires the product ID, the shop ID, the user ID of the blog establisher, and the user ID of the purchaser or user who has completed the transaction of the transaction object as a cause for displaying the information on the transaction object from the affiliate Cookie set in the received product purchase request (step S26). The product ID, the shop ID, the user ID of the blog establisher and the purchaser or user who has completed the transaction of the transaction object as a cause for displaying the information on the transaction obj ect as keys may be acquired from the member information DB 121.

Then, the system control unit 14 performs a payment processing on the products to be purchased on the basis of the information including the number of products to be purchased, the payment method and the delivery address of the products from the received product purchase request (step S27). Then, the system control unit 14 determines whether the product ID of the product on which the payment processing has been performed and the shop ID having sold the product match with the product ID and the shop ID acquired from the affiliate Cookie, acquires a predetermined rate of the affiliate reward from the shopping information DB 122, for example, and calculates the affiliate reward for the user ID of the blog establisher and the user ID of the purchaser or user who has completed the transaction of the transaction object as a cause for displaying the information on the transaction object, respectively.

Then, the system control unit 14 sets the affiliate reward calculated for the user ID of the blog establisher which have been acquired from the affiliate Cookie and the user ID of the purchaser or user who has completed the transaction of the transaction object as a cause for displaying the information on the transaction object, in association with the user ID of the blog establisher and the user ID of the purchaser or user who has completed the transaction of the transaction object as a cause for displaying the information on the transaction object, respectively, and registers the affiliate reward set for the user ID of the blog establisher and the user ID of the purchaser or user in the member information DB 121, for example (step S28).

The system control unit 14 may notify that the affiliate reward has been paid to the user of the blog establisher and the purchaser or user who has completed the transaction of the transaction object as a cause for displaying the information on the transaction object via e-mail, for example.

In this way, when the blog viewer has purchased a product displayed in the information on the transaction object via the affiliate link information set for the information on the transaction object displayed in the widget display region, a predetermined affiliate reward is pad to the blog establisher of the blog page where the widget display region is set and the purchaser or user who has completed the transaction of the transaction object as a cause for displaying the information on the transaction object in the widget display region.

The aforementioned embodiment does not intend to limit the present invention to the scope of claims. All the combinations of structures described in the embodiment are not essential for solving the problems of the present invention. The structures described in the embodiment may be combined and embodied as needed.

As described above, according to the present embodiment, the system control unit 14 is configured to specify a plurality of transaction objects to be presented to the blog viewer on the basis of the activity history information indicating a history of activities to the transaction objects by the blog viewer via the network in the widget display region, to detect the completion of transaction of each specified transaction object, and to display the information on the transaction objects whose transactions have been completed in response to the detection of the completion of the transaction in the order in which the transactions have been completed, thereby providing information which truly induces purchase motivation for the blog viewer.

### EXPLANATION OF REFERENCE NUMERALS

1-k: User terminal
2-k: Web site
3: Information processing server
11: Communication unit
12: Storage unit
13: I/O interface unit
14: System control unit
15: System bus
NW: Network
S: Information processing system

## Claims

1. An information processing device that displays information on a transaction object in a display region set at a predetermined location on a Web page displayed in a terminal device, comprising:
an activity history information acquiring means that acquires activity history information indicating a history of activities to a transaction object by a user of the terminal device via a network;
a transaction object specifying means that specifies a plurality of transaction objects to be presented to the user from a storing means that stores information on transaction objects on the basis of the activity history information acquired by the activity history information acquiring means;
a detecting means that detects completion of transaction of each transaction object specified by the transaction object specifying means; and
a control means that displays information on a transaction object whose transaction has been completed in the display region in the order in which the transactions have been completed in response to the detection of the completion of transaction by the detecting means.

2. The information processing device according to claim 1, wherein the display region includes partial display regions divided in a predetermined size per transaction object whose transaction has been completed, and
when the detecting means continuously detects completions of transactions of related transaction objects within a predetermined period of time,
the control means displays information on the related transaction objects together in the partial display regions for displaying any one transaction object among the related transaction objects.

3. The information processing device according to claim 1 or 2, wherein the control means displays information on a purchaser or user of the transaction object whose transaction has been completed together with the information on the transaction object whose transaction is detected to have been completed by the detecting means.

4. The information processing device according to any one of claims 1 to 3, wherein affiliate link information is set in information on a transaction object displayed in the display region by the control means, and
the device comprising:
a reward payment processing means that, when a transaction of the transaction object is newly completed via the affiliate link information, sets information on an affiliate reward, the affiliate reward being paid to an establisher of the Web page and a purchaser or user who has completed the transaction of the transaction object as a cause for displaying the information of the transaction object, for the information on the establisher of the Web page and the information on the purchaser or user who has completed the transaction of the transaction object as a cause for displaying the information on the transaction object.

5. The information processing device according to any one of claims 1 to 4, wherein the control means displays stock information on stocks of the transaction object together with the information on the transaction object whose transaction is detected to have been completed by the detecting means.

6. The information processing device according to any one of claims 1 to 5, wherein the control means displays advertisement information on a provider providing the transaction object together with the information on the transaction object whose transaction is detected to have been completed by the detecting means.

7. An information processing method that is performed by an information processing device for displaying information on a transaction object in a display region set at a predetermined location on a Web page displayed in a terminal device, comprising:
an activity history information acquiring step of acquiring activity history information indicating a history of activities to a transaction object by a user of the terminal device via a network;
a transaction object specifying step of specifying a plurality of transaction objects to be presented to the user from a storing means that stores information on transaction objects on the basis of the activity history information acquired by the activity history information acquiring step;
a detecting step of detecting completion of transaction of each transaction object specified by the transaction object specifying step; and
a control step of displaying information on a transaction object whose transaction has been completed in the display region in the order in which the transactions have been completed in response to the detection of the completion of transaction by the detecting step.

8. An information processing program for causing a computer included in an information processing device for displaying information on a transaction object in a display region set at a predetermined location on a Web page displayed in a terminal device to execute:
an activity history information acquiring step of acquiring activity history information indicating a history of activities to a transaction object by a user of the terminal device via a network;
a transaction object specifying step of specifying a plurality of transaction objects to be presented to the user from a storing means that stores information on transaction objects on the basis of the activity history information acquired by the activity history information acquiring step;
a detecting step of detecting completion of transaction of each transaction object specified by the transaction object specifying step; and
a control step of displaying information on a transaction object whose transaction has been completed in the display region in the order in which the transactions have been completed in response to the detection of the completion of transaction by the detecting step.

9. A recording medium which records an information processing program for causing a computer included in an information processing device for displaying information on a transaction object in a display region set at a predetermined location on a Web page displayed in a terminal device to execute:
an activity history information acquiring step of acquiring activity history information indicating a history of activities to a transaction object by a user of the terminal device via a network;
a transaction object specifying step of specifying a plurality of transaction objects to be presented to the user from a storing means that stores information on transaction objects on the basis of the activity history information acquired by the activity history information acquiring step;
a detecting step of detecting completion of transaction of each transaction object specified by the transaction object specifying step; and
a control step of displaying information on a transaction object whose transaction has been completed in the display region in the order in which the transactions have been completed in response to the detection of the completion of transaction by the detecting step.
